# EUROPEAN PATENT APPLICATION

(11) **EP 1 422 915 A1**
(43) Date of publication of application: **26.05.2004**
(21) Application number: 03255063.4
(22) Date of filing: 14.08.2003
(51) Int. Cl.: H04M 3/42

(54) **Method of providing a temporary telephone number**

(30) Priority: 22.11.2002 US 302248
(71) Applicant: Lucent Technologies Inc., Murray Hill, NJ 07974-0636 (US)
(72) Inventor: Garcia, Michael C., Naperville Illinois 60540 (US)
(74) Representative: Watts, Christopher Malcolm Kelway, Dr.

(57) **Abstract**

The present invention provides a method of providing a temporary telephone number for a telephone having a directory number. Upon receiving a call request including a called number, the communication system determines if the called number is a temporary telephone number. If the called number is a temporary telephone number, the communication system determines the directory number of a phone associated with the called number. The communication system then routes the call to the phone, preferably by using the directory number of the called phone. When finished using the temporary telephone number, the communication system returns the temporary phone number to a pool to be used again by a different user as a temporary telephone number.

## Description

### FIELD OF THE INVENTION

This invention relates generally to the field of communication systems, and more particularly to routing call requests to telephones in a communication system.

### BACKGROUND OF THE INVENTION

In current communication systems, a user dials a desired telephone number when attempting to establish communication with a called party. The called number is passed to a call processing function in the communication system, which determines how to alert the phone associated with the called number using the called number and performs such alerting as necessary.

There are occasions when a user wants other parties to call but does not wish to divulge their home phone number or cell phone number. One example is when selling an item, such as a car. A user may want to have interested parties contact him by calling him on his home or cell phone. However, the seller may not want to provide his home phone number.

There are other situations when a user may want to be contacted on her phone but does not want to give out her phone number for security reasons. Currently, a caller may block their caller identification information from being displayed on a called phone. However, service providers are now providing features that block such calls, to avoid the hassle of being contacted by telemarketing firms. In such cases, the calls may not be allowed to be completed.

Therefore, a need exists for a method that allows a user to be contacted on a telephone of choice without having to give out the directory number of that telephone.

### BRIEF SUMMARY OF THE INVENTION

The present invention provides a method of providing a temporary telephone number for a telephone having a directory number. The communication system assigns a temporary telephone number to a telephone. The temporary telephone number can be assigned for a predetermined length of time or can expire at a predetermined time, such as a chosen date. The temporary telephone number can be a member of a predetermined group of phone numbers, such as a predetermined list of telephone numbers, telephone numbers having a predetermined area code, or telephone numbers having a predetermined exchange. The temporary telephone number is different than the directory number.

Upon receiving a call request including a called number, the communication system determines if the called number is a temporary telephone number. This determination can be made by determining if the called number is one of a predetermined group of telephone numbers, determining if the called number includes a predetermined area code, or determining if the called number includes a predetermined exchange.

If the called number is a temporary telephone number, the communication system determines the directory number of a phone associated with the called number. The communication system then routes the call to the phone, preferably by using the directory number of the called phone.

At the expiration of the timer or at the predetermined date, the communication system deassigns the temporary telephone number from the first telephone. Calls to the temporary telephone number will not be forwarded to the first point after this point. The communication system returns the temporary telephone number to a pool of available temporary telephone numbers that are available. The temporary telephone number can be assigned to a second telephone having a second directory number.

### BRIEF DESCRIPTION OF THE SEVERAL VIEWS OF THE DRAWINGS

FIG. 1 depicts a flowchart of a method for assigning and deassigning a temporary telephone number in accordance with an exemplary embodiment of the present invention.
FIG. 2 depicts a flowchart of a method for routing a call to a telephone after determining if the called number is a temporary number in accordance with an exemplary embodiment of the present invention.
FIG. 3 depicts a table including temporary numbers and associated directory numbers in accordance with an exemplary embodiment of the present invention.
FIG. 4 depicts a table including temporary numbers having a predetermined exchange and associated directory numbers in accordance with an exemplary embodiment of the present invention.
FIG. 5 depicts a table including temporary numbers having a predetermined area code and associated directory numbers in accordance with an exemplary embodiment of the present invention.
FIG. 6 depicts a table including temporary numbers associated with directory numbers and categories in accordance with an exemplary embodiment of the present invention.

### DETAILED DESCRIPTION OF THE INVENTION

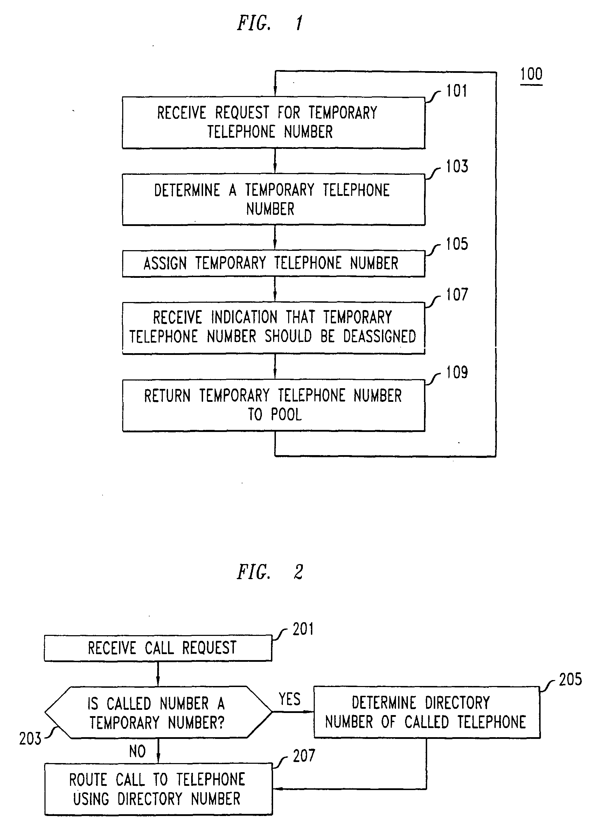

FIG. 1 depicts a flowchart 100 of a method for assigning and deassigning a temporary telephone number in accordance with an exemplary embodiment of the present invention. The communication system receives (101) a request for a temporary telephone number. In one exemplary embodiment, the request for a temporary telephone number includes a request for any temporary number to be associated with a desired directory number of a phone. The phone can be either a wireline or a wireless phone. The request also preferably includes the length of time that the requester desires to have the temporary number. This can be in the form of a date at which the temporary telephone number will expire, or can be in the form of a time period that the user desires the temporary phone number, such as for one week.

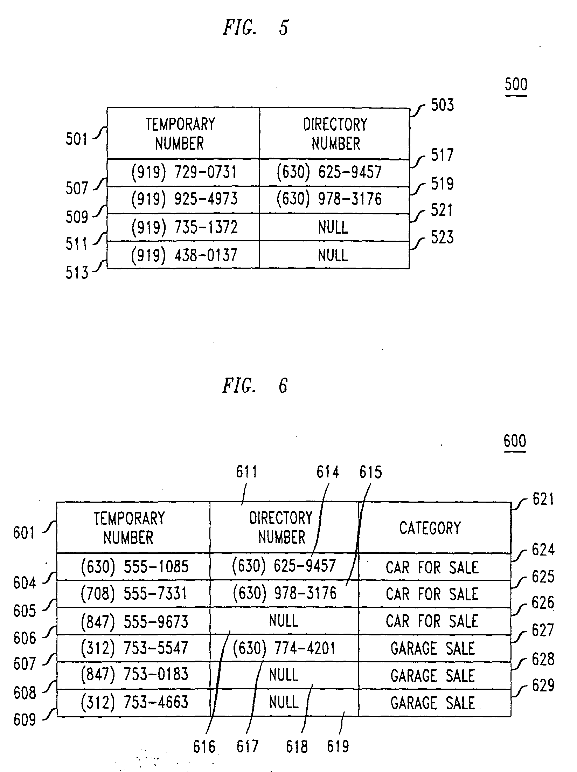

In another exemplary embodiment, the request for a temporary telephone number includes a category that the temporary telephone number will be used for. For example, the category could be a car for sale, a garage sale, a lost pet, as well as other examples. Categories are discussed in more detail in FIG. 6 below.

The communication system determines (103) a temporary telephone number. In one exemplary embodiment of the present invention, the communication system reserves a predetermined group of telephone number for use as temporary telephone numbers. The communication system may reserve all phone numbers having a predetermined area code as temporary telephone numbers. Alternately, the communication system may reserve all phone numbers having a predetermined exchange as temporary telephone numbers. Alternately, the communication system may reserve all phone numbers within a predetermined range as temporary telephone numbers.

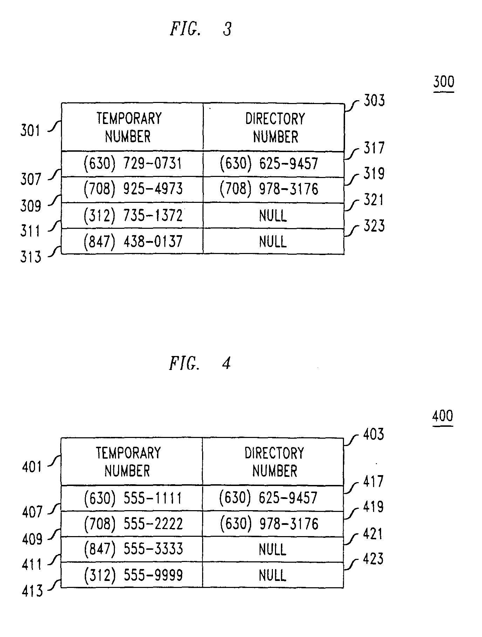

The communication system assigns (105) the temporary telephone number to the requesting phone. This is preferably accomplished by writing the directory number to a database in a field associated with the temporary telephone number. Exemplary databases are depicted in FIGs. 3-6 below. The requesting phone can then be contacted using either the directory number of the phone or the temporary telephone number.

The communication system receives (107) an indication that the temporary telephone number should be deassigned from the requesting phone. This can be the result of a timer expiration, a particular date or time hit, or a request initiated by the user. In an exemplary embodiment of the present invention, the communication system will continuously check the expiration dates of temporary telephone numbers. Upon expiration, the communication system will stop the temporary telephone number from being translated to the regular telephone number. Instead, until the temporary phone number is reassigned, a vacant number announcement or a special announcement can be played to callers to the temporary telephone number.

The communication system then returns (109) the temporary telephone number to a pool of available numbers. This returned temporary telephone number can be reassigned to another requesting user.

The process then returns to step 101 to receive requests for temporary telephone numbers.

FIG. 2 depicts a flowchart 200 of a method for routing a call to a telephone after determining if the called number is a temporary number in accordance with an exemplary embodiment of the present invention. The communication system receives (201) a call request including a called number.

The communication system then determines (203) if the called number is a temporary number. In one exemplary embodiment, the communication system determines that this is a temporary number by checking the called number against a list of temporary numbers stored at the communication system. In a second exemplary embodiment, the communication system determines if the called number is a temporary number by checking the area code of the called number against a predetermined list of area codes that correspond to temporary numbers. In a further exemplary embodiment, the communication system determines if the called number is a temporary number by checking the exchange of the called number against a predetermined list of exchanges that correspond to temporary numbers.

If the called number is a temporary number, the communication system determines (205) the directory number of the called telephone. This is accomplished by using the called number to retrieve the directory number from a lookup table or the like, as shown in FIGs. 3-6 below.

The communication system then routes (207) the call to the telephone using the directory number of the called phone.

FIG. 3 depicts a table 300 including temporary numbers and associated directory numbers in accordance with an exemplary embodiment of the present invention. Table 300 depicts an exemplary embodiment where the temporary numbers do not have a predetermined exchange or area code.

Table 300 preferably includes two columns, a temporary telephone number column 301 and a directory number column 303. Table 300 also includes a plurality of rows, such as rows 307, 309, 311, and 313 depicted in FIG. 3. It should be understood that table 300 can include many more rows, but only four rows are shown for clarity.

Table 300 is used to correlate a temporary number with a directory number. For example, when the communication system receives a call request with a temporary number of (708) 925-4973, the communication system searches the temporary number column 301 until it finds an entry of (708) 925-4973. The communication system then retrieves the associated directory number, in this example entry 319 with a value of (708) 978-3176, and uses the directory number for routing the call.

Temporary number entries 311 and 313 have associated with them the value NULL, as shown in fields 321 and 323, respectively. This indicates that these temporary numbers are currently not assigned to a directory number and are available for use upon request. If a call comes in directed for a temporary telephone number that is currently associated with a NULL value, the communication system may play a prerecorded message that indicates that the temporary telephone number is no longer assigned to a valid directory number.

FIG. 4 depicts a table 400 including temporary numbers having a predetermined exchange and associated directory numbers in accordance with an exemplary embodiment of the present invention. As used herein, a ten digit telephone number comprises three portions: a three digit area code, a three digit exchange, and a four digit extension.

Table 400 includes two columns, temporary number column 401 and directory number column 403. Table 400 includes a plurality of rows 407, 409, 411, and 413. It should be understood that table 400 can include many more rows, but only four rows are shown for clarity.

Each temporary number cell has an associated directory number cell. For example, temporary number cell 407 is associated with directory number cell 417, temporary number cell 409 is associated with directory number cell 419, and so forth.

Temporary number column 401 includes a plurality of temporary numbers available. It should be understood that there can be any number of temporary numbers reserved, but only four are displayed in FIG. 4 for clarity. In the embodiment depicted in FIG. 4, each temporary number has the same exchange, 555.

Utilizing this exemplary embodiment on an incoming call request, the communication system checks the exchange to determine if the call is one that is being made to a temporary number. In this manner, the communication system is only required to perform temporary number processing when the called number has an exchange that has been assigned to temporary numbers.

Directory number fields 421 and 423 include a value of "NULL", which indicates that the associated temporary number, values in cells 411 and 413 respectively, are currently not assigned to a phone. These unassigned numbers are available to be assigned to a new phone that requests a temporary telephone number. If a call comes in directed for a temporary telephone number that is currently associated with a NULL value, the communication system may play a prerecorded message that indicates that the temporary telephone number is no longer assigned to a valid directory number.

FIG. 5 depicts a table 500 including temporary numbers having a predetermined area code and associated directory numbers in accordance with an exemplary embodiment of the present invention.

Table 500 includes two columns, temporary number column 501 and directory number column 503. Table 500 includes a plurality of rows 507, 509, 511, and 513. It should be understood that table 500 can include many more rows, but only four rows are shown for clarity.

Each temporary number cell has an associated directory number cell. For example, temporary number cell 507 is associated with directory number cell 517, temporary number cell 509 is associated with directory number cell 519, and so forth.

Temporary number column 501 includes a plurality of temporary numbers available. It should be understood that there can be any number of temporary numbers reserved, but only four are displayed in FIG. 5 for clarity. In the embodiment depicted in FIG. 5, each temporary number has the same area code, 919.

Utilizing this exemplary embodiment on an incoming call request, the communication system can check the area code to determine if the call is one that is being made to a temporary number. In this manner, the communication system is only required to perform temporary number processing when the called number has an area code that has been assigned to temporary numbers.

Directory number fields 521 and 523 include a value of "NULL", which indicates that the associated temporary number, values in cells 511 and 513 respectively, are currently not assigned to a phone. These unassigned numbers are available to be assigned to a new phone that requests a temporary telephone number. If a call comes in directed for a temporary telephone number that is currently associated with a NULL value, the communication system may play a prerecorded message that indicates that the temporary telephone number is no longer assigned to a valid directory number.

FIG. 6 depicts a table 600 including temporary numbers associated with directory numbers and categories in accordance with an exemplary embodiment of the present invention.

Table 600 includes three columns, temporary number column 601, directory number column 611, and category column 621. Table 600 includes a plurality of rows 604-609. It should be understood that table 600 can include many more rows, but only six rows are shown for clarity.

Each temporary number cell has an associated directory number cell and a category cell. For example, temporary number cell 604 is associated with directory number cell 614 and category cell 624, temporary number cell 605 is associated with directory number cell 615 and category cell 625, and so forth.

Temporary number column 601 includes a plurality of temporary numbers available. It should be understood that there can be any number of temporary numbers reserved, but only six are displayed in FIG. 6 for clarity. In the embodiment depicted in FIG. 6, the temporary numbers include non-uniform area codes, exchanges, and extensions. It should be understood that the temporary numbers can be configured such that they all have the same area code, exchange, or both. This could facilitate call processing of calls made to temporary telephone numbers.

Directory number fields 616, 618, and 619 include a value of "NULL", which indicates that the associated temporary number, values in cells 606, 608, and 609 respectively, are currently not assigned to a phone. These unassigned numbers are available to be assigned to a new phone that requests a temporary telephone number. If a call comes in directed for a temporary telephone number that is currently associated with a NULL value, the communication system may play a prerecorded message that indicates that the temporary telephone number is no longer assigned to a valid directory number.

In accordance with the embodiment depicted in FIG. 6, each temporary number also has a category associated therewith. In accordance with an exemplary embodiment of the present invention, the communication system assigns temporary numbers to phones based upon the category that the temporary number is being used for. For example, category fields 624, 625, and 626 include the category "Car For Sale", and category fields 627, 628, and 629 include the category "Garage Sale".

When a new request is received at the communication system, the communication system determines the type of category this request is in. This can be a part of the application process, or can be requested after the temporary phone number has been requested. Upon receiving the category, the communication system preferably assigns a temporary number that is in the same category as the requested category.

As an example, consider the following scenario. A first user who is selling his car obtains a first temporary phone number. The first seller may desire a temporary number so that he does not have to give out his home or cellular phone number. In addition, once the car is sold he can cancel the first temporary number and no longer be bothered with calls for a car that he has already sold.

Upon selling his car, the first user cancels the first temporary phone number. The communication system removes the directory number associated with the first temporary phone number, preferably by replacing the first user's directory number with the value "NULL".

Now a second user who is trying to sell her car requests a temporary phone number. In this example, the communication system assigns the first temporary number with the second user's directory number. The second user can advertise her car for sale and include as a contact number the first temporary number.

Users interested in the second car can call the first temporary number and be connected with the second user. An additional benefit of the present invention is that users who may have been interested in purchasing the first car who call the first directory number will be connected with the second user. In this manner, the caller is connected with a user who is selling a car as opposed to a user who has already sold his car. Further, this provides more potential purchasers to the seller of the second car.

As an alternate embodiment of the present invention, the communication system could provide a recording that is tailored to the category called. For example, a recording could be played to the caller that lists car dealerships that sell used cars for a user who calls a currently unassigned temporary number that has a category of "Car For Sale".

The nature of categories that can be covered by the present invention is not limited to those depicted in FIG. 6. Other suitable examples of suitable categories include, but are not limited to, homes for sale, lost pets, and any other application that could benefit from obtaining a temporary telephone number for a limited amount of time.

The present invention thereby provides a method for providing a temporary phone number to a phone. Providing a temporary number to a phone allows the user of the phone to use the temporary number and be contacted on their home or wireless phone without having to give out the home or wireless phone number. This provides the user with fewer unnecessary calls, while also providing for additional security for users who wish to be contacted on their home or wireless phone without having to give out their home or wireless phone number.

While this invention has been described in terms of certain examples thereof, it is not intended that it be limited to the above description, but rather only to the extent set forth in the claims that follow.

## Claims

1. A method of providing a temporary telephone number for a telephone having a directory number, the method comprising the steps of:
assigning a temporary telephone number to the telephone, the temporary telephone number being different than the directory number;
receiving a call request for the temporary telephone number; and
routing the call request to the telephone based upon receipt of the temporary telephone number.

2. A method of providing a temporary telephone number in accordance with claim 1, wherein the step of assigning a temporary telephone number comprises assigning a temporary telephone number for a predetermined length of time.

3. A method of providing a temporary telephone number in accordance with claim 2, the method further comprising the step of assigning the temporary telephone number to a second phone.

4. A method of providing a temporary telephone number in accordance with claim 1, wherein the temporary telephone number is a member of a predetermined group of phone numbers.

5. A method of providing a temporary telephone number in accordance with claim 4, wherein the predetermined group of phone numbers have the same area code.

6. A method of providing a temporary telephone number in accordance with claim 4 wherein the predetermined group of phone numbers have the same exchange.

7. A method of providing a temporary telephone number in accordance with claim 1, the method further comprising the step of determining the directory number of the telephone based upon the temporary telephone number.

8. A method of assigning alternate telephone numbers to a telephone having a directory number, the method comprising:
assigning a temporary telephone number to a first telephone having a first directory number, the temporary telephone number being different than the first directory number;
deassigning the temporary telephone number from the first telephone; and
assigning the temporary telephone number to a second telephone having a second directory number, the second telephone being different than the first telephone and the second directory number being different than the temporary telephone number.

9. A method of assigning alternate telephone numbers to a telephone having a directory number in accordance with claim 8, wherein the step of assigning a temporary telephone number to a first telephone comprises assigning the temporary telephone number to the first telephone based upon a predetermined category.

10. A method of routing a call to a telephone comprising:
receiving a call request, the call request including a called number;
if the called number is one of a predetermined group of telephone numbers, determining the directory number of a phone associated with the called number; and
routing the call to the phone.
